# EUROPÄISCHE PATENTSCHRIFT

(11) **EP 0 654 294 B1**
(45) Veröffentlichungstag und Bekanntmachung des Hinweises auf die Patenterteilung: **03.12.1997**
(21) Anmeldenummer: 94117826.1
(22) Anmeldetag: 11.11.1994
(51) Int. Cl.: B01D 33/073, B01D 33/50

(54) **Verfahren und Vorrichtung zum Ausfiltrieren und Rückspülen von Feststoff-Partikeln aus Flüssigkeiten**
Process and apparatus for the filtration of solid particles from liquids and the backwashing of the filter
Procédé et dispositif de filtration de particules solides de liquides et le rinçage du filtre à contre-courant

(30) Priorität: 18.11.1993 DE 4339268
(43) Veröffentlichungstag der Anmeldung: 24.05.1995
(73) Patentinhaber: Hans Huber GmbH Maschinen- und Anlagenbau, D-92334 Berching (DE)
(72) Erfinder: Grienberger, Johann, Dr., D-91207 Lauf (DE); Bogner, Rudolf, D-92318 Neumarkt (DE); Fromman, Christian, D-92364 Deining (DE)
(74) Vertreter: Rehberg, Elmar, Dipl.-Ing.

(56) Entgegenhaltungen:
- EP-A- 0 525 753
- CH-A- 553 588
- DE-A- 3 834 982
- US-A- 4 578 198

## Beschreibung

Die Erfindung bezieht sich auf ein Verfahren und eine Vorrichtung zum Ausfiltrieren und Rückspülen von Feststoff-Partikeln aus Flüssigkeiten, mit den in den Oberbegriffen der Ansprüche 1 und 5 angegebenen Merkmalen. Eine solche Vorrichtung wird insbesondere als Bestandteil von Kläranlagen eingesetzt, beispielsweise auch bei hydraulisch überlasteten Anlagen, bei denen Belebtschlammpartikel in einem Nachklärbecken nicht vollständig sedimentieren und aus diesem herausgeschwemmt werden.

Ein Verfahren und eine Vorrichtung der eingangs beschriebenen Art sind aus der EP-A-0 525 753 bekannt. Die Filtertrommel ist gänzlich unter dem Flüssigkeitsspiegel angeordnet wird von der Flüssigkeit von außen nach innen durchströmt. Die Achse der Filtertrommel kann auch horizonzal ausgerichtet angeordnet sein. Die Mantelfläche der Filtertrommel ist mit einem Filtermedium belegt. Von der Mantelfläche stehen Trennstege nach außen ab, sodaß nur ein Teil der Umfangsfläche der Filtertrommel für Filterzwecke genutzt werden kann. Im unteren Bereich der Filtertrommel ist eine Rückspülvorrichtung zur Entfernung des Filterkuchens von dem Filtermedium vorgesehen, wobei über eine im Innern der Filtertrommel ortsfest angeordnete Spritzeinrichtung mit Spritzkopf Spritzflüssigkeit auf die Rückseite der Mantelfläche der Filtertrommel gespritzt wird und der so geloste Filterkuchen außen von einer Flüssigkeitsströmung hinweggeführt wird. Es ist auch eine Leitung für eine Entlüftung und - bei Auftreten eines Unterdrucks in einer Kammer der Spritzeinrichtung - für eine Belüftung vorgesehen. Die beiderseits der Filtertrommel angeordneten Kammern der Rückspülvorrichtung sind gegenüber der Mantelfläche der Filtertrommel abgedichtet, sodaß die Rückspülvorrichtung unabhängig vom Systemdruck der Filtervorrichtung arbeiten kann. Die Spritzeinrichtung weist Düsen für das Ausspritzen von Spritzflüssigkeit durch die in der Filtertrommel befindliche Flüssigkeit hindurch auf die Rückseite der Mantelfläche der Filtertrommel auf. Der so gelöste Filterkuchen wird außen von einer Flüssigkeitsströmung hinweggeführt.

Bei der aus der CH-A-553 588 bekannten Vorrichtung wird auch bereits eine gänzlich unter dem Flüssigkeitsspiegel angeordnete Filtertrommel eingesetzt, deren Mantelfläche von einem Filtermedium belegt ist und von außen nach innen durchströmt wird. Der gesamte Umfang der Mantelfläche ist dabei für die Zwecke der Filtration genutzt. Es ist eine Rückspülvorrichtung zur Entfernung des Filterkuchens von dem Filtermedium vorgesehen, die einen Saugkopf in Form einer Saugleiste aufweist, welche im unteren Bereich der Filtertrommel außen angeordnet ist, so daß der Filterkuchen intermittierend abgesaugt werden kann. Nachteilig hieran ist, daß die Reinigungswirkung für das Filtermedium durch die Saugleistung der Pumpe der Saugeinrichtung begrenzt ist. Oft besteht die Gefahr, daß infolge der begrenzten Saugleistung das Filtermedium, welches als Tuch ausgebildet sein kann, derart verstopft, daß eine wirksame Reinigung in regelmäßigen Abständen durch Abspritzen des Filtermediums mit Flüssigkeit unter hohem Druck erfolgen muß. Weiterhin werden durch diese Verschmutzung die Filtrationszyklen verkürzt, und es steigt der Spülwasserbedarf. Während der Reinigung über die Saugeinrichtung wird das Filtermedium in Form eines Tuches angesaugt, und es kommt bei längerer Betriebszeit zu einer Streckung und einem Verschleiß des Tuches an dem Saugkopf der Saugeinrichtung.

Aus der US-A-5 139 670 ist eine Vorrichtung zum Ausfiltrieren und Rückspülen von Feststoff-Partikeln aus Flüssigkeiten bekannt, bei der eine von der verschmutzten Flüssigkeit von innen nach außen durchströmte Filtertrommel eingesetzt wird. In nachteiliger Weise kann dabei der gesamte Umfang der Mantelfläche der Filtertrommel nicht gleichzeitig als Filterfläche genutzt werden. Es ist eine Rückspülvorrichtung vorgesehen, die mit einem Spritzkopf einer Spritzeinrichtung arbeitet und die außerhalb der Filtertrommel und oberhalb des Flüssigkeitsspiegels vorgesehen ist. Damit kann Reinigungsflüssigkeit auf das Filtermedium der Filtertrommel gespritzt werden, so daß der sich auf dem inneren Umfang gebildete Filterkuchen abgespritzt und über einen Einwurftrichter und eine entsprechende Leitung aus der Filtertrommel herausgeführt werden kann. Die erzielbare Reinigungswirkung ist dabei gut, weil die Wirkung der gespritzten Flüssigkeitsstrahlen infolge Arbeitens im Luftraum voll und ohne Abschwächung zur Auswirkung angewendet werden kann.

Aus der EP-B-74 966 ist eine Vorrichtung zum Ausfiltrieren von Feststoff-Partikeln aus einer Trübe, insbesondere aus Abwasser in einer Kläranlage bekannt, bei der keine Filtertrommel, sondern ebene Filterplatten eingesetzt werden, die mit dem Filtermedium belegt sind. Es ist eine Rückspülvorrichtung vorgesehen, die eine Spritzeinrichtung mit Spritzkopf auf der einen Seite des Filtermediums und eine Saugeinrichtung mit Saugkopf auf der anderen Seite aufweist. Sowohl der Spritzkopf wie auch der Saugkopf sind an der Filterplatte bzw. dem Filtermedium so geführt, daß eine Abdichtung erreicht wird, wodurch eine Ansaugung von Falschwasser verhindert wird. Nachteilig hieran ist, daß der Aufbau der Filterplatten mit den Dichtelementen die Vorrichtung kompliziert und aufwendig macht. Durch den Kontakt der Filterplatten und des Filtermediums mit dem Spritzkopf und dem Saugkopf entsteht eine erhebliche Reibung und ein entsprechender Verschleiß der Filterplatten und des Filtermediums, was die Lebensdauer nachteilig beeinflußt. Die durch den Spritzkopf erbrachte Reinigungswirkung ist grundsätzlich beschränkt, da die ausgestoßenen Flüssigkeitsstrahlen durch ein Flüssigkeitspolster hindurch zur Einwirkung gebracht werden und dabei stark abgebremst werden, bevor sie das Filtermedium erreichen. Wird bei einer solchen Vorrichtung die Reinigungskapazität überschritten, dann setzt sich das Filtermedium immer mehr zu, und es steigt der Flüssigkeitsspiegel an. Es erhöht sich nachteilig die Druckdifferenz, und es tritt eine Klemmwirkung zwischen dem verstopften Filtermedium und den relativ zu den Filterplatten zu bewegenden Organen der Reinigungseinrichtung, nämlich dem Spritzkopf und dem Saugkopf ein, wodurch die Rückspülvorrichtung ihre Funktion nicht mehr erfüllen kann.

Der Erfindung liegt die Aufgabe zugrunde, ein Verfahren und eine Vorrichtung der eingangs beschriebenen Art aufzuzeigen, bei denen keine Abbremsung der Spritzstrahlen des Spritzwassers durch die Flüssigkeit und auch kein Kontaktverschleiß auftritt.

Erfindungsgemäß wird dies bei dem Verfahren der eingangs beschriebenen Art dadurch erreicht, daß zu Beginn jedes Rückspülzyklusses in die Filtertrommel ein Luftpolster eingebracht und damit Flüssigkeit in der Filtertrommel verdrängt wird, und daß die Spritzflüssigkeit über die im Innern der Filtertrommel gegenüber der Mantelfläche der Filtertrommel abdichtungslos angeordnete Spritzeinrichtung durch das Luftpolster hindurch auf die Rückseite der Mantelfläche der Filtertrommel gespritzt wird.

Die Erfindung geht von dem Gedanken aus, bei jedem Rückspülzyklus, der intermittierend ausgelöst bzw. durchgeführt wird, unterhalb der Oberfläche des Flüssigkeitsspiegels in die Filtertrommel ein Luftpolster einzubringen bzw. aufzubauen. Dieses Luftpolster erreicht eine solche Größe und Ausdehnung, daß zumindest die Auslässe an dem Spritzkopf und die Rückseite der Mantelfläche der Filtertrommel im oberen Bereich der Filtertrommel von Luft umspült werden, damit die aus dem Spritzkopf ausgetriebene Spritzflüssigkeit durch das Luftpolster hindurch und ohne Abbremsung durch eine Flüssigkeit auf die Rückseite der Mantelfläche der Filtertrommel auftrifft und ihre Reinigungswirkung mit ebensolcher Intensität erbringt, wie dies bei Filtertrommeln erreicht wird, die nur teilweise in den Flüssigkeitsspiegel eintauchen und bei denen die Spritzeinrichtung oberhalb des Wasserspiegels angeordnet ist und damit in Luft arbeitet. Auf der Abströmseite der Filtertrommel bzw. des Filtermediums wird mit dem Spritzkopf der Spritzeinrichtung in Luft gearbeitet, während auf der Anströmseite der Filtertrommel in der Flüssigkeit gearbeitet wird. Dort wird eine Flüssigkeitsströmung erzeugt bzw. bereitgestellt, mit der der gelöste Filterkuchen hinweggeführt wird. Dabei wird die Flüssigkeit gleichsam als Transportmittel für den gelösten Filterkuchen genutzt. Diese Arbeitsweise - auf der Abströmseite in Luft und auf der Anströmseite in Flüssigkeit - wird unterhalb des Flüssigkeitsspiegels durchgeführt. Der Spritzkopf ist im oberen Bereich der Filtertrommel angeordnet, also dort, wo sich die Luftblase ansammelt. Die Flüssigkeitsströmung zur Abfuhr des Filterkuchens ist zweckmäßig ebenfalls im oberen Bereich, gegenüberliegend zu dem Spritzkopf vorgesehen. Durch die Nutzung der Luft auf der einen Seite und der Flüssigkeit auf der anderen Seite wird ein direkter Kontakt zwischen der Filtertrommel bzw. dem Filtermedium und den Elementen der Rückspülvorrichtung vermieden, so daß auch ein Verschleiß vermieden wird. Die Filtertrommel und das Filtermedium können auch erheblich einfacher ausgebildet werden; Dichtelemente, wie im Stand der Technik systemnotwendig erforderlich, kommen in Fortfall. Überraschenderweise ist bei dem neuen Verfahren die Effektivität der Reinigung bzw. der Rückspülung so groß, daß auch Überlastungen der Reinigungskapazität nicht zu einem Ausfall führen können. Im Gegenteil, ein sehr dichter Filterkuchen läßt sich mit dem neuen Verfahren überraschenderweise sehr wirkungsvoll entfernen, weil durch die während der Reinigung aus den Düsen auf das Filtermedium gespritzte Flüssigkeit beim Durchdringen des Luftpolsters und des Filtermediums Luftblasen verursacht, die zu einem Aufschwimmen des Filterkuchens auf der anderen Seite beitragen.

Für die Abfuhr des gelösten Filterkuchens außen von der Filtertrommel bzw. dem Filtermedium über eine Flüssigkeitsströmung ergeben sich mehrere Möglichkeiten. So kann der gelöste Filterkuchen von einem gegenüber der Mantelfläche der Filtertrommel abdichtungslos angeordneten Saugkopf einer Saugeinrichtung hinweggeführt werden. Der dem Filtermedium bzw. dem Filterkuchen zugekehrte Rand des Saugkopfes muß in einiger Entfernung von dem Filterkuchen enden, damit ganz bewußt Falschwasser für die notwendige Flüssigkeitsströmung angesaugt werden kann. Ebenso werden die während der Reinigung entstehenden Luftblasen die Saugeinrichtung nachhaltig beeinflussen, sodaß auch deshalb Falschwasser mit angesaugt werden muß. Durch die Bewegungsenergie dieses Falschwassers wird der gelöste Filterkuchen hinwegtransportiert.

Es ist aber auch möglich, den gelösten Filterkuchen ohne Verwendung einer Saugeinrichtung in ein Flotationsbecken zu überführen. Zu diesem Zwecke muß ein solches Flotationsbecken im oberen Bereich außen an den Umfang der Filtertrommel angeschlossen sein. Das Flotationsbecken ist über Öffnungen mit der umgebenden Flüssigkeit verbunden, sodaß sich die beiden Wasserspiegel auf gleicher Höhe befinden. Der gelöste Filterkuchen wird über die aus den Düsen durch das Luftpolster auf das Filtermedium gespritzte Flüssigkeit in das Flotationsbecken gefördert. Die gleichzeitig entstehenden Luftblasen wirken unterstützend.

Das Luftpolster kann während eines Rückspülzyklusses ergänzt werden, und zwar in dem Maße, in welchem Luftblasen aus dem Luftpolster durch die Durchbrechungen in der Filtertrommel und dem Filtermedium nach oben entweichen, damit sichergestellt ist, daß über den Spritzkopf während des gesamten Rückspülzyklusses durch das Luftpolster hindurch gespritzt wird und die Effektivität der Abreinigung erhalten bleibt.

Die Filtertrommel kann in den Zeiten, in denen nicht rückgespült wird, stillgesetzt werden. Während des Rückspülzyklusses wird sie schrittweise oder auch kontinuierlich umlaufend angetrieben. Während dieses Rückspülzyklusses wird die Filtration nicht unterbrochen, sondern fortgesetzt. Die Steuerung der Rückspülzyklusse kann in Abhängigkeit von einem maximalen und minimalen Wasserspiegel oberhalb der Filtertrommel gesteuert werden.

Eine zur Durchführung des Verfahrens geeignete Vorrichtung kennzeichnet sich erfindungsgemäß dadurch, daß zum Aufbau des Luftpolsters ein im Innern der Filtertrommel endendes Eintragsrohr für Luft vorgesehen ist, und daß die Spritzeinrichtung mit dem Spritzkopf im Innern der Filtertrommel in deren oberem Bereich angeordnet und gegenüber der Mantelfläche der Filtertrommel abdichtungslos gelagert ist. Das Luftpolster kann auch über die Spritzeinrichtung mit dem Spritzkopf eingetragen werden.

Der Spritzkopf endet mit seinen Auslässen bzw. Düsen, die entlang einer Mantellinie der Filtertrommel über die gesamte Arbeitsbreite reichend vorgesehen sind, mit Abstand von der inneren Mantelfläche der Filtertrommel. Jedoch wird dieser Bereich während des Rückspülzyklusses von dem Luftpolster überbrückt, während er in rückspülfreien Zeiten von Flüssigkeit ausgefüllt wird.

Oberhalb des Spritzkopfes auf der Außenseite der Filtertrommel kann ein Saugkopf einer Saugeinrichtung ortsfest, gegenüber der Mantelfläche der Filtertrommel abdichtungslos und mit Abstand zu dem Filtermedium der Filtertrommel unterhalb des Flüssigkeitsspiegels angeordnet sein. Es versteht sich, daß der Saugkopf der Saugeinrichtung an eine Saugquelle angeschlossen ist, über die durch den Saugkopf und eine angeschlossene Leitung Flüssigkeit und darin befindlicher gelöster Filterkuchen abgeführt wird. Selbst eine relativ dicke Schicht Filterkuchen kann nicht zu einem Ausfall der Saugeinrichtung führen.

Es ist aber auch möglich, daß oberhalb des Spritzkopfes auf der Außenseite der Filtertrommel ein Flotationsbecken angeschlossen ist, welches mit einer Einrichtung zur Abgabe von Mikroblasen ausgestattet ist. Auf diese Weise kann in dem Flotationsbecken eine Strömung entstehen, mit der abgelöster Filterkuchen zum Aufschwimmen gebracht wird.

Das Flotationsbecken kann einen Überlauf aufweisen und mit der die Filtertrommel umgebenden Flüssigkeit verbunden sein, so daß der Wasserspiegel der zu filtrierenden Flüssigkeit und der Wasserspiegel im Flotationsbecken immer gleich gehalten werden und zwischen einem Maximalwert und einem Minimalwert schwanken können. Dabei ist der Maximalwert so eingerichtet, daß der Überlauf des Flotationsbeckens erreicht bzw. überschritten wird, so daß die herausgeschwemmten und flotierten Feststoffe in regelmäßigen Zyklen von der Oberfläche des Flotationsbeckens abgezogen bzw. entfernt werden können. Die Einrichtung zur Abgabe von Mikroblasen kann über eine Druckentspannung von in Wasser gelöster Luft oder mit Hilfe von Elektrodenpaaren erfolgen.

Die Filtertrommel kann mit ihrer Achse auf einem Abzugsrohr für die filtrierte Flüssigkeit drehbar gelagert sein. Die Filtertrommel wird auch dabei horizontal mit ihrer Achse ausgerichtet eingesetzt, damit auf diese Weise ein oberer Bereich für die Anordnung des Luftpolsters zur Verfügung steht. Sie wird zweckmäßig auf dem Abzugsrohr drehbar gelagert, damit während eines Reinigungszyklusses die verschiedenen Bereiche der Filtertrommel nach oben geführt und rückgespült werden können.

Das Abzugsrohr kann in einer Filtratkammer enden, in der ein Überlauf unterhalb des Flüssigkeitsspiegels um die Filtertrommel angeordnet ist. Damit wird die für die Filtration notwendige Druckdifferenz geschaffen, sodaß das Filtermedium kontinuierlich durchströmt wird.

Die Erfindung wird anhand bevorzugter Ausführungsbeispiele weiter erläutert und beschrieben. Es zeigen:
- Figur 1: eine schematisierte Verdeutlichung der Anordnung einer zur Durchführung des Verfahrens geeigneten Vorrichtung,
- Figur 2: einen Vertikalschnitt durch die Vorrichtung mit den wesentlichen Elementen,
- Figur 3: eine vergrößerte Darstellung des oberen Bereiches der Filtertrommel und
- Figur 4: eine weitere Ausführungsform der Vorrichtung mit ihren wesentlichen Teilen.

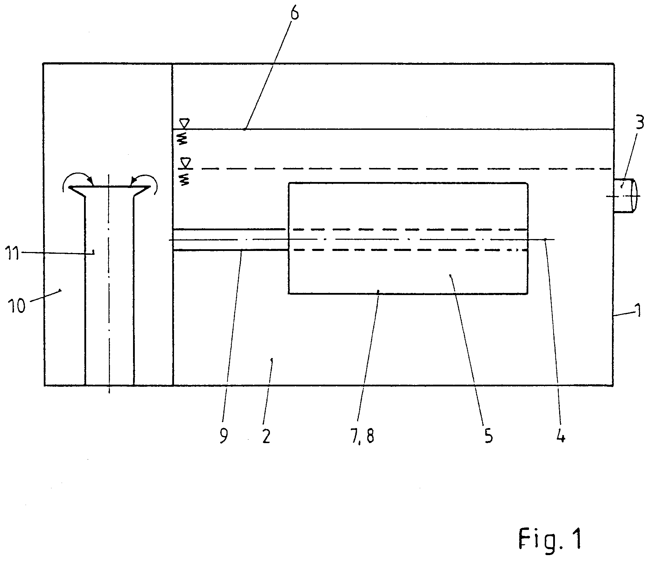

In Figur 1 ist ein Gerinne 1 schematisch angedeutet, welches auch als Behälter o. dgl. ausgebildet sein kann. In dem Gerinne 1 ist ein Raum 2 für die zu filtrierende Flüssigkeit vorgesehen, die über einen Zulauf 3 in den Raum 2 gelangt. Innerhalb des Raumes 2 ist mit horizontaler Achse 4 eine Filtertrommel 5 vorgesehen, die unterhalb eines Flüssigkeitsspiegels 6, der in durchgezogener Linienführung als maximaler Flüssigkeitsspiegel dargestellt ist, angeordnet ist. Durch gestrichelte Linienführung ist ein minimaler Flüssigkeitsspiegel während der Filtration angedeutet, so daß der Flüssigkeitsspiegel 6 zwischen diesen beiden Grenzen schwanken kann. Es ist ersichtlich, daß auch bei minimalem Flüssigkeitsspiegel die Filtertrommel 5 immer noch vollständig unter Wasser arbeitet und die für die Durchströmung erforderliche Druckdifferenz vorhanden ist. Die Filtertrommel 5 ist auf ihrer Mantelfläche 7 mit einem Filtermedium 8 belegt. Die Filtertrommel 5 in Form eines liegenden Zylinders kann aus Lochblech bestehen oder z. B. auch ein Quadratmaschengewebe aufweisen, auf welchem außen das Filtermedium 8, z. B. in Form eines Nadelfilzproduktes, eines Metall- oder Kunststoffgewebes oder eines Filterschaums aus Kunststoff aufgebracht ist. Die beiden Stirnseiten der Filtertrommel 5 sind geschlossen ausgebildet, wobei eine Stirnseite von einem Abzugsrohr 9 durchsetzt wird, welches gleichzeitig eine Lagerung für die Filtertrommel 5 abgeben kann. Es versteht sich, daß das Abzugsrohr im Innern der Filtertrommel 5 mit Durchbrechungen versehen ist, damit die Flüssigkeit von außen nach innen die Filtertrommel 5 durchströmen und über das Abzugsrohr 9 abgeführt werden kann. Das Abzugsrohr 9 endet in einer Filtratkammer 10, in der ein Überlauf 11 in Form eines Rohres so vorgesehen ist, daß die obere Kante des Überlaufs 11 tiefer liegt als der Flüssigkeitsspiegel 6 in dem Raum 2, damit auf diese Art und Weise die nötige Druckdifferenz für die Durchströmung der Filtertrommel 5 gegeben ist.

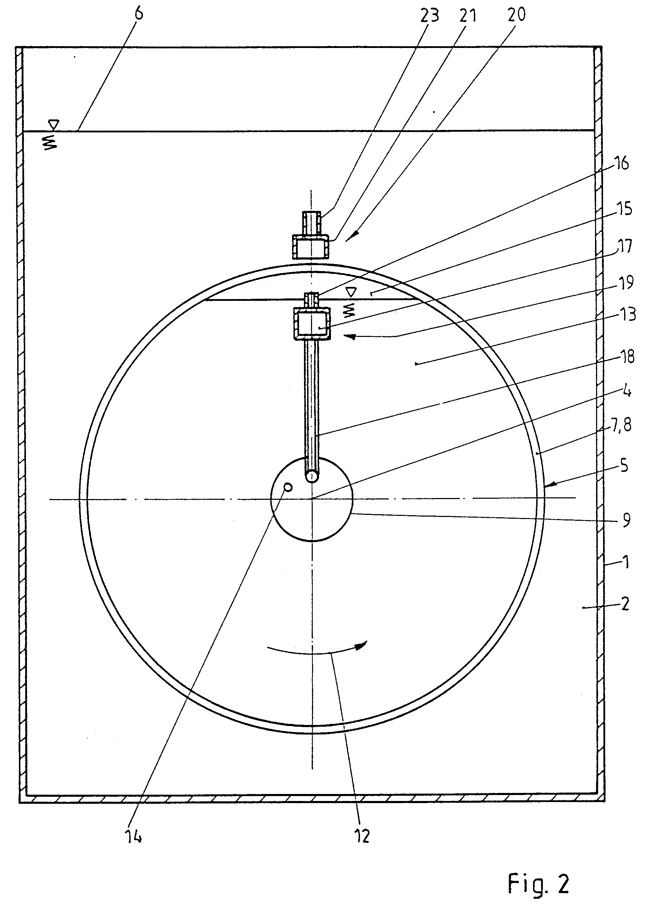

Figur 2 zeigt einen schematisierten Schnitt senkrecht zu der horizontalen Achse 4. Es ist erkennbar, wie die Filtertrommel 5 mit der Mantelfläche 7 und dem Filtermedium 8 unterhalb des Flüssigkeitsspiegels 6 angeordnet ist. Über einen nicht dargestellten Drehantrieb kann die Filtertrommel 5 in Richtung eines Pfeiles 12 oder auch entgegengesetzt dazu intermittierend angetrieben werden, wobei sie in den Zeiten, in denen keine Rückspülung stattfindet, zweckmäßig stillsteht, während des Rückspülzyklusses eine kontinuierliche oder absatzweise intermittierende Bewegung der Filtertrommel 5 in Richtung des Pfeiles 12 stattfindet. In den Innenraum 13 der Filtertrommel 5 mündet ein Eintragsrohr 14 für Luft, welches zweckmäßig durch das Abzugsrohr 9 hindurchgeführt ist. Das Eintragsrohr 14 dient dazu, ein Luftpolster 15 im oberen Bereich des Innenraums 13 der Filtertrommel 5 zu erzeugen und insoweit die Flüssigkeit dort zu verdrängen. Im Innenraum 13 der Filtertrommel 5 ist ortsfest ein mit Düsen 16 besetzter Spritzkopf 17 vorgesehen, der an eine Leitung 18 für unter Druck stehende Flüssigkeit angeschlossen ist, die vorzugsweise ebenfalls durch das Abzugsrohr 9 hindurchgeführt ist. Über eine nicht dargestellte Pumpe kann die Flüssigkeit in der Leitung 18 und über entsprechende Ventile gesteuert über die Düsen 16 ausgespritzt werden, wobei sich die Spritzstrahlen ausschließlich durch das Luftpolster 15 hindurchbewegen müssen und daher mit erheblicher Reinigungswirkung auf die Innenseite der Filtertrommel 5 bzw. deren Mantelfläche 7 und das Filtermedium 8 gelangen, so daß ein sich auf der Außenseite des Filtermediums 8 abgesetzter Filterkuchen wirksam gelöst wird. Die Düsen 16, die auf dem Spritzkopf 17 sitzen, erstrecken sich über die gesamte Breite bzw. Länge der Filtertrommel 5. Sie bilden mit dem Spritzkopf 17 und der Leitung 18 wesentliche Elemente einer Spritzeinrichtung 19. Diese Spritzeinrichtung 19 mit den Düsen 16 ist mit erheblichem Abstand zu der inneren Umfangsfläche der Filtertrommel 5 angeordnet, so daß keine Gefahr eines Verschleißes durch Kontakt o. dgl. besteht. Auch kann auf diese Art und Weise die notwendige Breitenwirkung über die hintereinander angeordneten Düsen 16 erzielt werden.

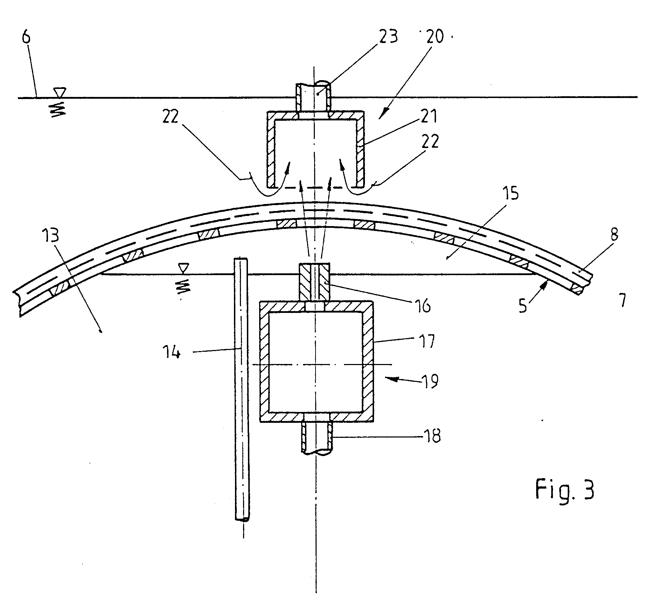

Neben der Spritzeinrichtung 19 ist auch eine Saugeinrichtung 20 vorgesehen, die als wesentliche Elemente einen Saugkopf 21 aufweist, der auf der Außenseite der Filtertrommel 7 oben, also gegenüberliegend zu der Spritzeinrichtung 19 ortsfest angeordnet ist. Der freie Rand des Saugkopfes 21 ist auch hier mit Abstand zu der Filtertrommel 5 bzw. dem Filtermedium 8 vorgesehen, damit einerseits kein Verschleiß an dem Saugkopf 21 und/oder dem Filtermedium 8 eintreten kann. Von besonderer Bedeutung ist jedoch, daß durch diesen Abstand eine Flüssigkeitsströmung, die durch die Pfeile 22 (Figur 3) ermöglicht wird, dazu dient, den durch die Spritzeinrichtung 19 gelösten Filterkuchen hinwegzutransportieren. Es versteht sich, daß auch der Saugkopf 21 mit einer Leitung 23 verbunden ist, die letztlich zu einer Saugquelle führt, also beispielsweise einer Pumpe, mit deren Hilfe Flüssigkeit und gelöster Filterkuchen abgesaugt und hinweggeführt werden.

In Figur 3 ist in vergrößertem Maßstab noch einmal der obere Bereich dargestellt, der aber immer noch unterhalb des Flüssigkeitsspiegels 6 liegt. Es ist erkennbar, daß das Eintragsrohr 14 für das Luftpolster 15 auch bis nach oben geführt sein kann.

Ein Rückspülzyklus kann nun wie folgt ablaufen:
Bei kontinuierlicher Durchströmung der Filtertrommel 5 von außen nach innen werden sich zunehmend Feststoffpartikel auf der Außenseite des Filtermediums 8 absetzen, so daß die Durchtrittsfläche für die Flüssigkeit zunehmend verengt wird, wodurch bei kontinuierlichem Zulauf von zu filtrierender Flüssigkeit der Flüssigkeitsspiegel 6 ansteigen wird, bis er einen festgelegten Maximalwert erreicht. Auch dabei wird die Filtertrommel immer noch von außen nach innen durchströmt, und es wird filtrierte Flüssigkeit über den Überlauf 11 abgeführt. Mit dem Erreichen des maximalen Flüssigkeitsspiegels 6 wird der Reinigungszyklus in Gang gesetzt, indem zunächst über das Eintragsrohr 14 das Luftpolster 15 so aufgebaut wird, daß zumindest die Düsen 16 der Spritzeinrichtung 19 in das Luftpolster 15 eintauchen. Über die Leitung 18 wird unter Druck stehende Flüssigkeit über die Düsen 16 auf den inneren Umfang der Mantelfläche 7 und das Filtermedium 8 gespritzt. Die Flüssigkeitsstrahlen werden, da sie nur die Luft des Luftpolsters 15 zu durchdringen haben, in ihrer Bewegungsenergie kaum abgebremst, so daß sie den Filterkuchen an der Außenseite des Filtermediums 8 wirksam lösen. Auch die Saugeinrichtung 20 wird in Tätigkeit gesetzt, so daß über dem Saugkopf 21 und die Leitung 23 Flüssigkeit aus dem die Filtertrommel 5 umgebenden Raum gemäß den Pfeilen 22 abgesaugt wird. Diese Flüssigkeit nimmt den gelösten Filterkuchen mit. Während dieses Reinigungszyklusses wird die Filtertrommel 5 in Richtung des Pfeiles 12 kontinuierlich oder intermittierend angetrieben, wobei für den Antrieb eine volle Umdrehung der Filtertrommel 5 vorgesehen sein kann. Es ist aber auch möglich, den Reinigungszyklus solange andauern zu lassen, bis ein vorgewählter minimaler Flüssigkeitsspiegel erreicht ist, so daß davon auszugehen ist, daß eine wirksame Reinigung des Filtermediums stattgefunden hat und der Rückspülzyklus abgebrochen werden kann.

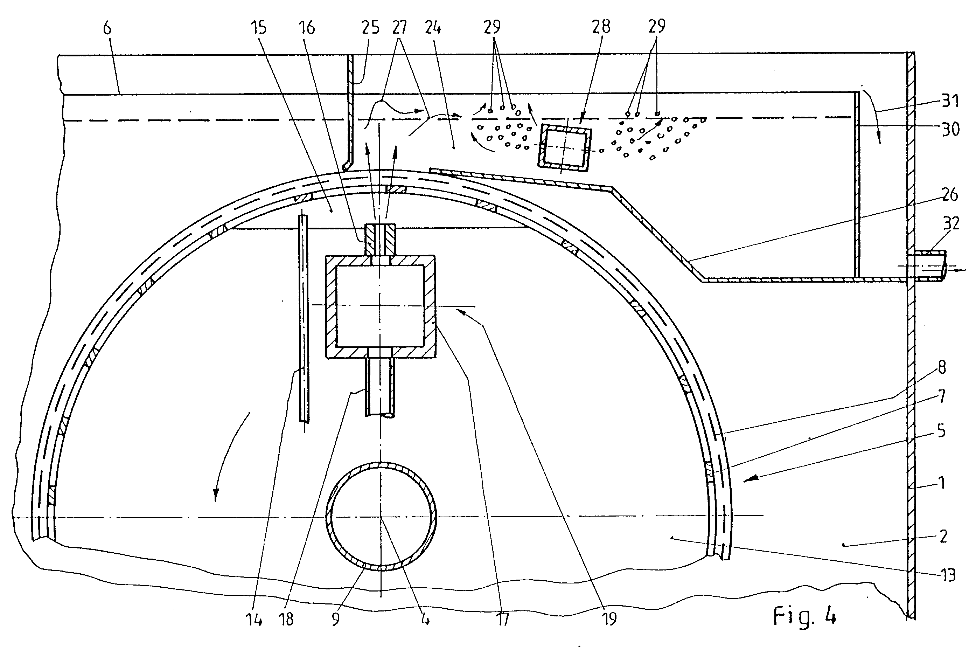

In Figur 4 ist eine weitere Ausführungsmöglichkeit der Vorrichtung dargestellt. Im Innenraum 13 der Filtertrommel 5 ist der gleiche Aufbau vorgesehen wie bei dem Ausführungsbeispiel der Figuren 1 bis 3. Jedoch ist die Saugeinrichtung durch ein Flotationsbecken 24 ersetzt, welches auf der Außenseite der Filtertrommel 5 oberhalb der Spritzeinrichtung 16 angeordnet bzw. angeschlossen ist. Das Flotationsbecken 24 ist über Leitbleche 25 und 26 begrenzt, es steht aber andererseits grundsätzlich mit der Flüssigkeit im Raum 2 in Verbindung, und zwar im oberen Bereich der Filtertrommel 5. Durch die Spritzeinrichtung 19 abgelöster Filterkuchen kann somit gemäß den Pfeilen 27 in dem Flotationsbecken 24 aufschwimmen und auf diese Weise vom Umfang des Filtermediums 8 hinweggeführt werden. Durch die Mantelfläche 7 hindurchtretende Luftblasen des Luftpolsters 15 unterstützen diesen Vorgang. Im Flotationsbecken 24 kann eine Einrichtung 28 zur Abgabe von Mikroblasen 29 vorgesehen sein, die eine Flüssigkeitsströmung in dem Flotationsbecken 24 bewirken oder begünstigen. Der während eines Reinigungs- bzw. Rückspülzyklusses abgelöste Filterkuchen wird sich insoweit an der Oberfläche im Flotationsbecken 24 ansammeln und zusammen mit dem ansteigenden Flüssigkeitsspiegel 6 angehoben werden. Das Flotationsbecken 24 weist einen Überlauf 30 auf, über welchen gemäß Pfeil 31 aufgeschwemmter Filterkuchen in Schüben entsprechend den Reinigungszyklen abgeführt werden kann. Dies geschieht dann über ein Rohr 32. Der aufgeschwemmte Filterkuchen kann auch über einen Räumer fortgeführt werden.

Ein Rückspülzyklus wird auch hier wieder vom Erreichen des maximalen Wasserspiegels 6 ausgelöst. Dabei wird zunächst über den Überlauf 30 bei vorherigen Rückspülzyklen abgeschiedener Filterkuchen hinweggeführt. Die Spritzeinrichtung 19 wird in Tätigkeit gesetzt und die Filtertrommel 5 schrittweise oder kontinuierlich in Umlauf gesetzt. Dabei wird das Filtermedium 8 gesäubert, so daß das Filtermedium besser durchlässig für die Flüssigkeit wird, wodurch der Flüssigkeitsspiegel sowohl im Raum 2 wie auch im Flotationsbecken 24 absinken wird. Dies geschieht bis zum Erreichen eines minimalen Wasserspiegels, der in Figur 4 ebenfalls gestrichelt angedeutet ist. Das zu Beginn des Rückspülzyklusses aufgebaute Luftpolster 15 kann dazu benutzt werden, um die Aufschwimmwirkung des abgelösten Filterkuchens im Flotationsbecken 24 zu begünstigen und zu verstärken. Dabei ist es erforderlich, entweder zu Beginn eines Reinigungszyklusses ein entsprechend großes Luftpolster 15 aufzubauen oder dieses während eines Reinigungszyklusses fortlaufend so zu ergänzen, daß die Düsen 16 immer in das Luftpolster 15 eintauchen bzw. von diesem umspült bleiben. Durch die Reinigung des Filtermediums 8 wird der Wasserspiegel 6 absinken. Der Rückspülzyklus wird dann bei vorgesehenem minimalen Flüssigkeitsspiegel beendet werden.

### BEZUGSZEICHENLISTE

- 1: - Gerinne
- 2: - Raum
- 3: - Zulauf
- 4: - Achse
- 5: - Filtertrommel
- 6: - Flüssigkeitsspiegel
- 7: - Mantelfläche
- 8: - Filtermedium
- 9: - Abzugsrohr
- 10: - Filtratkammer
- 11: - Überlauf
- 12: - Pfeil
- 13: - Innenraum
- 14: - Eintragsrohr
- 15: - Luftpolster
- 16: - Düse
- 17: - Spritzkopf
- 18: - Leitung
- 19: - Spritzeinrichtung
- 20: - Saugeinrichtung
- 21: - Saugkopf
- 22: - Pfeil
- 23: - Leitung
- 24: - Flotationsbecken
- 25: - Leitblech
- 26: - Leitblech
- 27: - Pfeil
- 28: - Einrichtung
- 29: - Mikroblasen
- 30: - Überlauf
- 31: - Pfeil
- 32: - Rohr

## Patentansprüche

1. Verfahren zum Ausfiltrieren und Rückspülen von Feststoff-Partikeln aus Flüssigkeiten, mit einer gänzlich unter dem Flüssigkeitsspiegel (6) und zumindest in etwa horizontal angeordneten Filtertrommel (5), deren Mantelfläche mit einem Filtermedium (8) belegt ist und von der Flüssigkeit von außen nach innen durchströmt wird, und mit einer Rückspülvorrichtung zur Entfernung des Filterkuchens von dem Filtermedium, wobei über eine im Innern der Filtertrommel (5) angeordnete Spritzeinrichtung (19) mit Spritzkopf (17) Spritzflüssigkeit auf die Rückseite der Mantelfläche (7) der Filtertrommel (5) gespritzt wird und der so gelöste Filterkuchen außen von einer Flüssigkeitsströmung hinweggeführt wird, **dadurch gekennzeichnet**, daß zu Beginn jedes Rückspülzyklusses in die Filtertrommel (5) ein Luftpolster (15) eingebracht und damit Flüssigkeit in der Filtertrommel (5) verdrängt wird, und daß die Spritzflüssigkeit über die im Innern der Filtertrommel gegenüber der Mantelfläche (7) der Filtertrommel (5) abdichtungslos angeordnete Spritzeinrichtung (19) durch das Luftpolster (15) hindurch auf die Rückseite der Mantelfläche (7) der Filtertrommel (5) gespritzt wird.

2. Verfahren nach Anspruch 1, **dadurch gekennzeichnet**, daß der gelöste Filterkuchen von einem gegenüber der Mantelfläche (7) der Filtertrommel (5) abdichtungslos angeordneten Saugkopf (21) einer Saugeinrichtung (20) hinweggeführt wird.

3. Verfahren nach Anspruch 1, **dadurch gekennzeichnet**, daß der gelöste Filterkuchen in ein Flotationsbecken (24) überführt wird.

4. Verfahren nach Anspruch 1, **dadurch gekennzeichnet**, daß das Luftpolster (15) während eines Rückspülzyklusses ergänzt wird.

5. Vorrichtung zur Durchführung des Verfahrens nach einem der Ansprüche 1 bis 4, mit einer gänzlich unter dem Flüssigkeitsspiegel (6) und zumindest in etwa horizontal angeordneten antreibbaren Filtertrommel (5), mit einer mit einem Filtermedium (8) belegten und von der Flüssigkeit von außen nach innen durchströmten Mantelfläche (7) sowie mit einer eine ortsfest angeordnete Spritzeinrichtung (19) mit Spritzkopf (17) aufweisenden Rückspülvorrichtung zur Entfernung des Filterkuchens von dem Filtermedium (8), **dadurch gekennzeichnet**, daß zum Aufbau des Luftpolsters (15) ein im Innern der Filtertrommel (5) endendes Eintragsrohr (14) für Luft vorgesehen ist, und daß die Spritzeinrichtung (19) mit dem Spritzkopf (17) im Innern der Filtertrommel (5) in deren oberem Bereich angeordnet und gegenüber der Mantelfläche (7) der Filtertrommel (5) abdichtungslos gelagert ist.

6. Vorrichtung nach Anspruch 5, **dadurch gekennzeichnet**, daß oberhalb des Spritzkopfes (17) auf der Außenseite der Filtertrommel (5) ein Saugkopf (21) einer Saugeinrichtung (20) ortsfest, gegenüber der Mantelfläche (7) der Filtertrommel (5) abdichtungslos und mit Abstand zu dem Filtermedium (8) der Filtertrommel (5) unterhalb des Flüssigkeitsspiegels (6) angeordnet ist.

7. Vorrichtung nach Anspruch 5, **dadurch gekennzeichnet**, daß oberhalb des Spritzkopfes (17) auf der Außenseite der Filtertrommel (5) ein Flotationsbecken (24) angeschlossen ist, welches mit einer Einrichtung (28) zur Abgabe von Mikroblasen (29) ausgestattet ist.

8. Vorrichtung nach Anspruch 7, **dadurch gekennzeichnet**, daß das Flotationsbecken (24) einen Überlauf (30) aufweist und mit der die Filtertrommel (5) umgebenden Flüssigkeit verbunden ist.

9. Vorrichtung nach Anspruch 5 bis 8, **dadurch gekennzeichnet**, daß die Filtertrommel (5) mit ihrer Achse (4) auf einem Abzugsrohr (9) für die filtrierte Flüssigkeit drehbar gelagert ist.

10. Vorrichtung nach Anspruch 9, **dadurch gekennzeichnet**, daß das Abzugsrohr (9) in einer Filtratkammer (10) endet, in der ein Überlauf (11) unterhalb des Flüssigkeitsspiegels (6) um die Filtertrommel (5) angeordnet ist.

## Claims

1. A process for the filtration of solid particles from liquids and the backwashing of the filter, with a filter drum (5) positioned completely below the liquid level (6) and arranged at least about horizontally, the filter drum having a cylindrical surface (7) coated with a filter medium (8), the liquid flowing through the outside of the filter drum to the inside, and a backwashing device for the removal of the filter cake from the filter medium, whereby a spraying liquid is sprayed by an ejection apparatus (19) including a spraying head (17) positioned in the interior of the filter drum (5) in the direction of the backside of the cylindrical surface (7) of the filter drum (5) so that the filter cake is removed by being withdrawn at the outside of filter drum (5) in a stream of liquid, **wherein** at the beginning of each cycle of backwashing an air cushion (15) is introduced in the filter drum (5) and thus liquid in the filter drum (5) is displaced, and the liquid jets are sprayed from the ejection apparatus (19) arranged in the interior of the filter drum (5) without being sealed to the filter drum penetrating through the air cushion (15) to the backside of the cylindrical surface (7) of the filter drum (5).

2. The process of claim 1, **wherein** the removed filter cake is withdrawn by a suction head (21) of a suction apparatus (20), the suction head (21) being spaced apart a distance from the filter drum.

3. The process of claim 1, **wherein** the removed filter cake is withdrawn in a flotation reservoir (24).

4. The process of claim 1, **wherein** the air cushion (15) is completed during a cycle of backwashing.

5. An apparatus for carrying out the process of one of the claims 1 to 4, containing a filter drum (5) positioned completely below the liquid level (6) and arranged at least about horizontally and having a cylindrical surface (7) coated with a filter medium (8), liquid flown from the outside of the filter drum to the inside of the filter drum, and a backwashing device located in fixed manner with an ejection apparatus (19) including a spraying head (17) for removal of the filter cake from the filter medium (8), **wherein** an inlet conduit (14) for air provided to generate an air cushion (15) extends into the interior of the filter drum (5), and the ejection apparatus (19) including the spraying head (17) is fixed at a distance to the upper region of the interior of filter drum (5), without being sealed with respect to the cylindrical surface (7) of filter drum (5).

6. The apparatus of claim 5, **wherein** above the spraying head (17) on the outside of filter drum (5) a suction head (21) of a suction apparatus (20) is located below the liquid level (6) at a fixed distance with respect to the surface (7) of the filter drum (5), the suction head in position with respect to the filter medium (8) of filter drum (5).

7. The apparatus of claim 5, **wherein** above the spraying head (17) on the outside of filter drum (5) there is a connection to a flotation reservoir (24), which contains a device (28) for ejecting microbubbles (29).

8. The apparatus of claim 7, **wherein** the flotation reservoir (24) has an overflow (30) and is connected with the liquid surrounding the filter drum (5).

9. The apparatus of claims 5 to 8, **wherein** the filter drum (5) with its axis (4) is supported horizontally on an outlet tube (9).

10. The apparatus of claim 9, **wherein** the outlet tube (9) extends into a filtration chamber (10), in which an overflow (11) is located below the liquid level (6).

## Revendications

1. Procédé de filtration de particules solides contenues dans des liquides et de lavage à contre-courant, avec un tambour de filtrage (5) placé entièrement au-dessous du niveau (6) du liquide et au moins à peu près horizontalement, dont la surface d'enveloppe est garnie d'un milieu de filtrage (8) et est traversée, de l'extérieur vers l'intérieur, par le liquide, et avec un dispositif de lavage à contre-courant destiné à éliminer le gâteau de filtrage du milieu de filtrage, un liquide de pulvérisation étant pulvérisé sur la face arrière de la surface d'enveloppe (7) du tambour de filtrage (5), par un dispositif de pulvérisation (19) à tête de pulvérisation (17) placé à l'intérieur du tambour de filtrage (5), et le gâteau de filtrage ainsi dissous est évacué à l'extérieur par un courant de liquide, caractérisé en ce qu'au début de chaque cycle de lavage à contre-courant un coussin d'air (15) est introduit dans le tambour de filtrage (5) et du liquide est ainsi déplacé dans le tambour de filtrage (5), et en ce que le liquide de pulvérisation est pulvérisé, par l'intermédiaire du dispositif de pulvérisation (19), placé à l'intérieur du tambour de filtrage, sans étanchéité par rapport à la surface d'enveloppe (7) du tambour de filtrage (5), à travers le coussin d'air (15), sur la face arrière de la surface d'enveloppe (7) du tambour de filtrage (5).

2. Procédé selon la revendication 1, caractérisé en ce que le gâteau de filtrage dissous est évacué par une tête d'aspiration (21) d'un dispositif d'aspiration (20), placée sans étanchéité par rapport à la surface d'enveloppe (7) du tambour de filtrage (5).

3. Procédé selon la revendication 1, caractérisé en ce que le gâteau de filtrage dissous est transféré dans un bassin de flottation (24).

4. Procédé selon la revendication 1, caractérisé en ce que le coussin d'air (15) est complété pendant un cycle de lavage à contre-courant.

5. Dispositif pour la mise en oeuvre du procédé selon l'une des revendications 1 à 4 avec un tambour de filtrage (5) disposé entièrement au-dessous du niveau (6) du liquide et au moins à peu près horizontalement, avec une surface d'enveloppe (7) garnie d'un milieu de filtrage (8) et traversée par le liquide, de l'extérieur vers l'intérieur, ainsi qu'avec un dispositif de lavage à contre-courant, comportant un dispositif de pulvérisation (19), monté en un lieu fixe, avec tête de pulvérisation (17), destiné à éliminer le gâteau de filtrage du milieu de filtrage (8), caractérisé en ce que pour constituer le coussin d'air (15), il est prévu un tube d'introduction (14) pour l'air, se terminant à l'intérieur du tambour de filtrage (5), et en ce que le dispositif de pulvérisation (19) avec la tête de pulvérisation (17) est placé à l'intérieur du tambour de filtrage (5), dans sa partie supérieure, et est monté sans étanchéité par rapport à la surface d'enveloppe (7) du tambour de filtrage (5).

6. Dispositif selon la revendication 5, caractérisé en ce qu'au-dessus de la tête de pulvérisation (17), sur le côté extérieur du tambour de filtrage (5), une tête d'aspiration (21) d'un dispositif d'aspiration (20) est placée en un lieu fixe, et sans étanchéité par rapport à la surface d'enveloppe (7) du tambour de filtrage (5) et à distance du milieu de filtrage (8) du tambour de filtrage (5), au-dessous du niveau (6) du liquide.

7. Dispositif selon la revendication 5, caractérisé en ce qu'au-dessus de la tête de pulvérisation (17), sur le côté extérieur du tambour de filtrage (5), est raccordé un bassin de flottation (24), qui est équipé d'un dispositif (28) pour la distribution de microbulles (29).

8. Dispositif selon la revendication 7, caractérisé en ce que le bassin de flottation (24) présente un tropplein (30) et est relié au liquide entourant le tambour de filtrage (5).

9. Dispositif selon les revendications 5 à 8, caractérisé en ce que le tambour de filtrage (5) avec son axe (4) est monté tournant sur un tube d'extraction (9) pour le liquide filtré.

10. Dispositif selon la revendication 9, caractérisé en ce que le tube d'extraction (9) se termine dans une chambre de filtrat (10), dans laquelle un tropplein (11) est placé au-dessous du niveau (6) du liquide, autour du tambour de filtrage (5).
